# EUROPÄISCHE PATENTSCHRIFT

(11) **EP 1 318 032 B1**
(45) Veröffentlichungstag und Bekanntmachung des Hinweises auf die Patenterteilung: **02.03.2005**
(21) Anmeldenummer: 02023276.5
(22) Anmeldetag: 17.10.2002
(51) Int. Cl.: B60C 23/00, B29D 30/06

(54) **Verfahren zur Herstellung eines Fahrzeugreifens mit einer Transpondereinheit**
Method of manufacturing a vehicle tyre provided with a transponder
Procédé de fabrication d'un pneu muni d'un transpondeur

(30) Priorität: 05.12.2001 DE 10159703
(43) Veröffentlichungstag der Anmeldung: 11.06.2003
(73) Patentinhaber: Continental Aktiengesellschaft, 30165 Hannover (DE)
(72) Erfinder: Kilsch, Armin Ralph, 30559 Hannover (DE)

(56) Entgegenhaltungen:
- EP-A- 0 505 905
- EP-A- 0 639 472
- EP-A- 0 689 950
- WO-A-99/29523
- WO-A-99/41093

## Beschreibung

Die Erfindung betrifft ein Verfahren zur Herstellung eines Fahrzeugreifens mit einer Transpondereinheit, die in einem Gummikissen eingebettet ist, das auf einer Reifenoberfläche des Reifens angeordnet ist, wobei der Reifen nach einem an sich bekannten Verfahren hergestellt wird und während dieses Herstellungsverfahrens das Gummikissen mit der Reifenoberfläche verbunden wird, wobei in dem Gummikissen zunächst ausschließlich ein Platzhalterstreifen angeordnet ist.

Transponder werden im Reifen für verschiedene Aufgaben eingesetzt. Hierzu zählt insbesondere eine Reifenidentifikation mit der ein Automobilhersteller u. a. schnell feststellen kann, aus welchem Reifenwerk ein bestimmter Reifen geliefert wurde. Andere Aufgaben können eine Luftdrucküberwachung, eine Temperaturmessung oder eine Messung der zurückgelegten Laufleistung des Reifens umfassen. Moderne Transponder bestehen aus einem Elektronikbauteil bzw. -Chip, in dem Sensorelemente angeordnet sein können sowie aus einer an dieses Elektronikbauteil angeschlossenen Antenne. Die gesamte Transpondereinheit aus Transponder und Antenne ist in der Regel in eine schützende Kunststoffhülle eingebettet und kann als flexibler dünner Streifen ausgebildet sein.

Ein Verfahren, Transponder in Reifen anzuordnen, besteht darin, die Transpondereinheit in eine umschließende Gummitasche einzubetten und anschließend wie einen Flicken auf der Innen- oder Außenseite eines fertigen ausvulkanisierten Reifens aufzukleben. Eine anderes Verfahren sieht vor, die Transpondereinheit in eine Reifenkonfektion einzubinden und direkt in einem Reifenbereich einzuvulkanisieren.

Die Anordnung der Transpondereinheit am Reifen mit Hilfe eines angeklebten Flickens besitzt den Nachteil, dass die Klebung schwierig zu realisieren ist. Der Reifen muss an der entsprechenden Stelle zunächst aufgeraut werden und die Klebung besitzt häufig nur eine begrenzte Haltbarkeit, da der Reifen im Betriebszustand eine erhebliche Dauerbeanspruchung auf die Verklebung des Flickens ausübt. Das Ablösen des Flickens würde den Transponder zerstören und könnte darüber hinaus der Reifeninnenseele Undichtigkeiten zufügen. Das direkte Einvulkanisieren der Transpondereinheit hat den Nachteil, dass die beim Vulkanisationsprozess entstehenden hohen Temperaturen die Elektronik des Transponders zerstören können. Ein weiterer Nachteil ist die direkte enge Verbindung, die beim Einvulkanisieren zwischen der Transpondereinheit und der umgebenden Gummimatrix entsteht. Diese teils stoffschlüssige Verbindung hat zur Folge, dass die mechanischen Belastungen des Reifens direkt von der Gummimatrix auf die Transpondereinheit übertragen werden. Die hohen mechanischen Beanspruchungen können sowohl zum Abreißen der Antennen führen als auch die Elektronik des Transponders gefährden.

Es sind verschiedene Verfahren zur Anordnung von Transpondern in Reifen bekannt. In der WO 00/07834 ist ein Verfahren und eine Vorrichtung offenbart, mit der eine Transpondereinheit in einem Luftreifen angeordnet werden kann. Der Flicken für die Transpondereinheit besitzt eine kreisförmige Öffnung und einen Hohlraum, in welchen die Transpondereinheit eingebettet wird. Der Flicken wird auf der Reifeninnenseite unterhalb der Laufstreifenmitte aufgeklebt. Ein Nachteil besteht in der unzuverlässigen Klebeverbindung mit der Reifeninnenseele.

In der EP 0 639 472 A1 ist ein Reifen mit einem Transponder offenbart, der auf der Reifeninnenseite im Bereich des Reifenwulstes angeordnet ist. Der Transponder wird direkt bei der Reifenherstellung im Reifen angeordnet und mitvulkanisiert.
Die EP 0 505 905 A1 zeigt ebenfalls einen Transponder in einem Reifen, der im Reifenwulst angeordnet ist und gleichfalls im Reifen mitvulkanisiert wird. Die WO 99 29523 zeigt einen Reifen mit einem Transponder und eine in die Reifeninnenseite einvulkanisierte Koppelspulenantenne.

In der US 5,500,065 wird ein Herstellungsverfahren offenbart, bei dem der Transponder entweder auf der Reifeninnenseite im Wulstbereich oder unterhalb der Laufstreifenmitte angeordnet wird. Ein Verfahren besteht darin, mit Hilfe von einem Platzhalterstreifen und einer Gummiabdeckung eine Tasche zu formen, in der die Transpondereinheit nachträglich eingebettet wird. Nachteilig ist bei diesem Verfahren, dass das nachträgliche Einbringen der Transpondereinheit schwierig durchzuführen ist und dabei die Gummiabdeckung beschädigt werden kann.

Der Erfindung liegt die Aufgabe zu Grunde, ein Verfahren zur Herstellung eines Fahrzeugreifens mit einem Transponder zu schaffen, mit dem die Transpondereinheit sicher und einfach in den Reifen angeordnet werden kann, das die Transpondereinheit nicht einer thermischen Belastung durch die Reifenvulkanisation aussetzt und das die Transpondereinheit im Betriebszustand des Reifens nur mit einer geringen mechanischen Belastung beansprucht.

Gelöst wird die Aufgabe gemäß den kennzeichnenden Merkmalen von Anspruch 1 dadurch, dass die Transpondereinheit nach Fertigstellung des Reifens wie folgt in das Gummikissen eingebracht wird:
- über eine Öffnung des Gummikissens wird die Transpondereinheit mit dem Platzhalterstreifen verbunden, und
- der Platzhalterstreifen wird durch eine zweite Öffnung des Gummikissens aus diesem herausgezogen, wobei die Transpondereinheit dabei gleichzeitig durch die erste Öffnung in das Gummikissen eingezogen wird.

Ein Vorteil der Erfindung ist insbesondere darin zu sehen, dass die Transpondereinheit erst nach Fertigstellung des Reifens in das Gummikissen eingebracht wird. Dadurch wird die Transpondereinheit nicht den hohen mechanischen Beanspruchungen ausgesetzt, die bei der herkömmlichen Reifenkonfektion auf der Reifenaufbautrommel, der Bombage oder der Vulkanisation auftreten. Es entfällt ebenfalls die hohe thermische Belastung der Transpondereinheit, die ansonsten beim direkten Einvulkanisieren zur Zerstörung der Elektronikbauteile der Transpondereinheit führen könnte. Das Einvulkanisieren des Gummikissens mit dem Platzhalterstreifen besitzt weiterhin den Vorteil, dass auf eine Klebung verzichtet werden kann und dadurch eine feste sowie dauerfeste Verbindung zwischen Gummikissen und Reifen geschaffen wird. Das Einziehen der Transpondereinheit in das Gummikissen mit Hilfe von zwei gegenüberliegenden Öffnungen bietet den Vorteil, dass das Gummikissen nur gering beschädigt wird und die Transpondereinheit auf diese Weise einfach sowie schnell in den Reifen eingebracht werden kann. Ein weiterer Vorteil ist darin zu sehen, dass zwischen der Transpondereinheit und der umgebenden Gummimatrix keine stoffsschlüssige Verbindung vorliegt, wie das andernfalls beim direkten Einvulkanisieren der Transpondereinheit der Fall ist. Auf diese Weise ist die Transpondereinheit einer erheblich geringeren mechanischen Belastung im Betriebszustand des Reifens ausgesetzt. Die Transpondereinheit ist wie in einer Tasche in das Gummikissen eingebettet und kann dadurch den Verformungen der umgebenden Gummimatrix des Reifens ausweichen, da eine Gleitbewegung zwischen der Transpondereinheit und dem Gummikissen möglich ist.

In einer vorteilhaften Weiterbildung der Erfindung ist vorgesehen, dass die in das Gummikissen eingebettete Transpondereinheit auf der Reifeninnenseite angeordnet ist. Auf diese Weise wird die Transpondereinheit durch die darüber liegenden Lagen des Reifens vor Einflüssen geschützt, die von außen auf den Reifen einwirken können. Außerdem besteht durch die Anordnung der Transpondereinheit auf der Reifeninnenseite die Möglichkeit, den Reifendruck zu überwachen, sofern ein Luftdrucksensor in der Transpondereinheit integriert ist.

In einer weiteren vorteilhaften Weiterbildung der Erfindung ist vorgesehen, dass auf einer Reifenaufbautrommel zunächst der in das Gummikissen eingebettete Platzhalterstreifen und darüber eine Reifeninnenseele aufgebracht werden. Dadurch wird eine feste und dauerhafte Verbindung zwischen dem Gummikissen und der Reifeninnenseele geschaffen. Das Gummikissen wird in die Reifeninnenseele eingedrückt und dort fest in diese einvulkanisiert. Die in das Gummikissen eingebettete Transpondereinheit ragt auf diese Weise nicht aus der Ebene der Reifeninnenseite heraus und ist dadurch besser gegen eine Ablösung geschützt.

In einer weiteren vorteilhaften Weiterbildung der Erfindung ist vorgesehen, dass sich das Gummikissen farblich von der Reifenoberfläche unterscheidet. Das gefärbte Gummikissen vereinfacht die Ortung des Platzhalterstreifens, der nach der Fertigstellung des Reifens durch die Transpondereinheit ersetzt wird.

In einer weiteren vorteilhaften Weiterbildung der Erfindung ist vorgesehen, dass während der Herstellung des Reifens zunächst ein Gummikissen ohne Öffnungen mit der Reifenoberfläche verbunden wird und das Gummikissen nach der Herstellung des Reifens mit den beiden Öffnungen versehen wird. Ein Anordnen der Öffnungen vor der Reifenvulkanisation würde die Gefahr in sich birgen, dass diese bei der Vulkanisation wieder verschlossen werden. Diese Gefahr wird durch die Weiterbildung ausgeschlossen.

In einer weiteren vorteilhaften Weiterbildung der Erfindung ist vorgesehen, dass die beiden Öffnungen in dem Gummikissen als Einschnitte ausgebildet sind, die an sich gegenüberliegenden Enden des Gummikissens eingeschnitten werden. Die Weiterbildung der Öffnung als Einschnitte bietet den Vorteil, dass das Gummikissen deshalb nur einer geringen Beschädigung ausgesetzt wird. Die Einschnitte können nach dem Einsetzen der Transpondereinheit leicht wieder, beispielsweise über eine Verklebung, geschlossen werden.

In einer weiteren vorteilhaften Weiterbildung der Erfindung ist vorgesehen, dass die Ausrichtungen der beiden Einschnitte parallel zur Längsausrichtung des Platzhalterstreifens liegen. Auf diese Weise lassen sich beide Enden des Platzhalterstreifens einfach durch die Einschnittöffnung freilegen, damit ein Ende mit der Transpondereinheit verbunden und das andere Ende des Platzhalterstreifens aus der entsprechenden Einschnittöffnung herausgezogen werden kann.

In einer weiteren vorteilhaften Weiterbildung der Erfindung ist vorgesehen, dass während der Herstellung des Reifens ein Gummikissen mit der Reifenoberfläche verbunden wird, das die beiden Öffnungen bereits aufweist, wobei aus jeder Öffnung ein Ende des Platzhalterstreifens herausragt. Dadurch erübrigt sich das nachträgliche Anordnen der beiden Einschnitte. Die Transpondereinheit wird direkt mit einem Ende des Platzhalterstreifens verbunden und anschließend wird der Platzhalterstreifen an seinem gegenüberliegenden Ende herausgezogen.

In einer weiteren vorteilhaften Weiterbildung der Erfindung ist vorgesehen, dass der Platzhalterstreifen aus einem Metall oder Teflonmaterial besteht. Beide Materialien bieten den Vorteil, dass sie hitzebeständig sind und dadurch die hohen Temperaturen beim Vulkanisationsprozess ohne Beschädigung überstehen können. Der Platzhalterstreifen verhindert ferner, dass beim Einschneiden der Öffnungen die Reifeninnenseele beschädigt wird und dem Reifen damit eine Undichtigkeit zugefügt würde.

In einer weiteren vorteilhaften Weiterbildung der Erfindung ist vorgesehen, dass der Platzhalterstreifen größere Abmessungen als die Transpondereinheit besitzt. Durch die größeren Abmessungen des Platzhaltestreifens wird ein bedeutender Bewegungsspielraum für die einzusetzende Transpondereinheit geschaffen. Die Bewegungsfreiheit der Transpondereinheit verringert erheblich die mechanischen Beanspruchungen, die von der umgebenden Gummimatrix auf die Transpondereinheit übertragen werden.

In einer weiteren vorteilhaften Weiterbildung der Erfindung ist vorgesehen, dass der Platzhalterstreifen mit einem Antihaftmittel beschichtet ist. Das Antihaftmittel verhindert ein Anvulkanisieren des Platzhalterstreifens an das Gummikissen. Ferner kann der Platzhalterstreifen auf Grund des Antihaftmittels einfacher aus dem Gummikissen gleiten. Das im Gummikissen verbleibende Antihaftmittel vereinfacht darüber hinaus das Einziehen der Transpondereinheit in das Gummikissen.

In einer weiteren vorteilhaften Weiterbildung der Erfindung ist vorgesehen, dass der Platzhalterstreifen über eine Klebung oder einen Formschluss mit der Transpondereinheit verbunden wird. Die Klebeverbindung lässt sich einfach realisieren und nach dem Einsetzen der Transpondereinheit leicht wieder trennen. Bei der formschlüssigen Verbindung besitzt der Platzhalterstreifen beispielsweise an einem Ende eine Öse, in die die Transpondereinheit eingehängt werden kann. Die formschlüssige Verbindung hat den Vorteil, dass sie schnell hergestellt und wieder gelöst werden kann.

In einer weiteren vorteilhaften Weiterbildung der Erfindung ist vorgesehen, dass der Platzhalterstreifen von der Transpondereinheit getrennt wird, nachdem die Transpondereinheit sich im Gummikissen befindet. Die Abtrennung des Platzhalterstreifens verhindert, dass er sich im Betriebszustand des Reifens von selber ablöst und anschließend die Reifeninnenseele beschädigen kann.

In einer weiteren vorteilhaften Weiterbildung der Erfindung ist vorgesehen, dass die Transpondereinheit an einem Ende eine Kunststofflasche aufweist. Mit Hilfe der Kunststofflasche kann eine einfache Klebeverbindung mit dem Platzhalterstreifen realisiert werden. Nach dem Einziehen der Transpondereinheit in das Gummikissen kann der Platzhalterstreifen auf einfache Weise durch ein Durchtrennen der Kunststofflasche erfolgen.

In einer weiteren vorteilhaften Weiterbildung der Erfindung ist vorgesehen, dass das Schließen der Einschnitte durch eine Kaltvulkanisation erfolgt. Das Schließen der Einschnitte verhindert, dass sich die Einschnittöffnungen im Betriebszustand des Reifens weiter öffnen und sich anschließend die Transpondereinheit aus dem Gummikissen bewegen kann. Das Verschließen der Einschnitte mit einer einfachen Klebung ist ebenfalls denkbar.

In einer weiteren vorteilhaften Weiterbildung der Erfindung ist vorgesehen, dass das Gummikissen in einem Wulstbereich auf der Reifeninnenseite angeordnet ist. Dieser Bereich des Reifens zeichnet sich durch eine hohe Verfomungssteifigkeit aus, wodurch die dort angeordnete Transpondereinheit einer möglichst geringen mechanischen Beanspruchung ausgesetzt wird. Es sind jedoch auch andere Reifenbereiche denkbar, an Stellen, an denen der Reifen möglichst wenig verformt wird.

Anhand eines Ausführungsbeispiels soll die Erfindung näher erläutert werden. Es zeigen:
- Figur 1: einen Radialschnitt eines Reifens mit Transpondereinheit,
- Figur 2: den Platzhalterstreifen und die Transpondereinheit als Draufsicht,
- Figur 3: den in das Gummikissen eingebetteten Platzhaltestreifen,
- Figur 4: den in das Gummikissen eingebetteten Platzhalterstreifen mit darüber liegender Reifeninnenseele auf einer Reifenaufbautrommel
- Figur 5: den im Reifen angeordneten Platzhalterstreifen nach Fertigstellung des Reifens als Teilausschnitt in perspektivischer Darstellung und
- Figur 6: den im Reifen angeordneten Platzhalterstreifen mit herausragenden Endbereichen nach Fertigstellung des Reifens als Teilausschnitt in perspektivischer Darstellung.

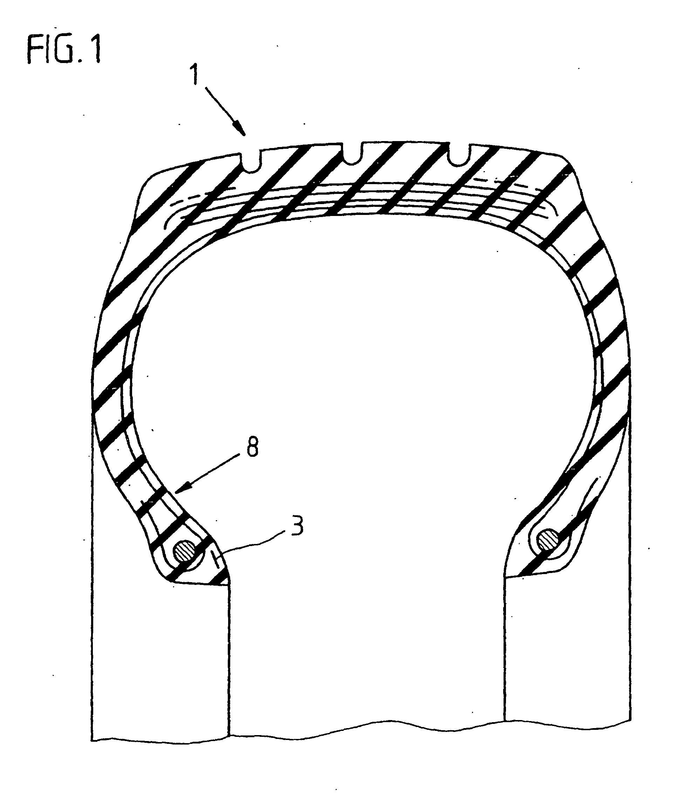

Figur 1 zeigt einen Radialschnitt eines Reifens 1 mit der Transpondereinheit 3, die auf der Reifeninnenseite 8 angeordnet ist. Die Transpondereinheit befindet sich vorzugsweise auf der Reifeninnenseite 8 im Wulstbereich.

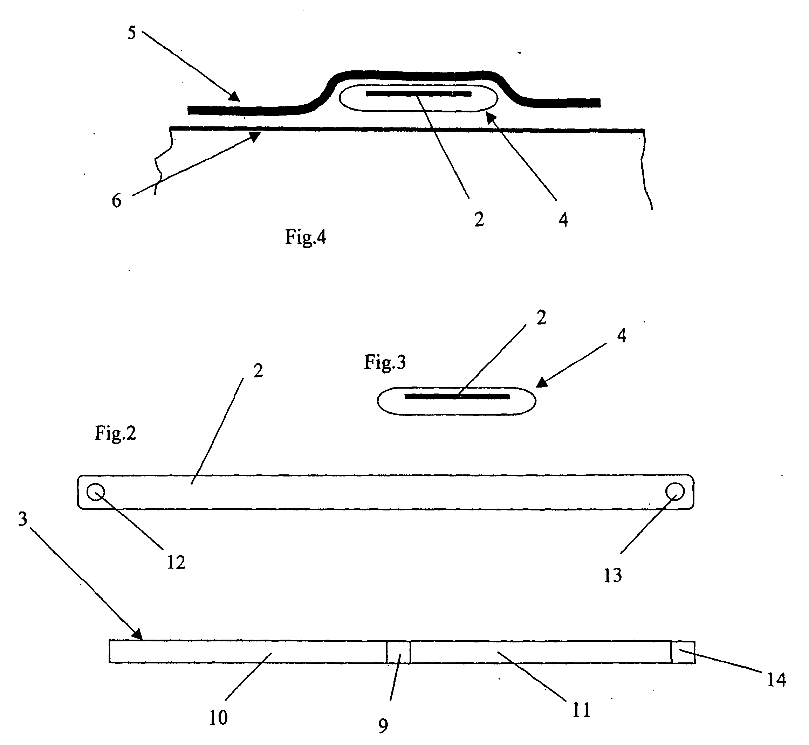

Figur 2 zeigt den Platzhalterstreifen 2 und die Transpondereinheit 3, bestehend aus einem Elektronikbauteil 9 und den beiden Antennen 10 und 11. Der Platzhalterstreifen 2 besitzt an beiden Enden kreisförmige Aussparungen 12 und 13, mit denen die Enden der Transpondereinheit 3 verbunden werden können. Der Platzhalterstreifen 2 hat größere Abmessungen als die Transpondereinheit 3. Die Transpondereinheit 3 besitzt als Weiterbildung eine Kuststofflasche 14, mit der ggf. ein Ende des Platzhalterstreifen über eine einfache Klebung verbunden werden kann.

Figur 3 zeigt einen Querschnitt des in das Gummikissen 4 eingebetteten Platzhalterstreifen 2. Das Gummikissen umschließt den Platzhalterstreifen 2 von allen Seiten.

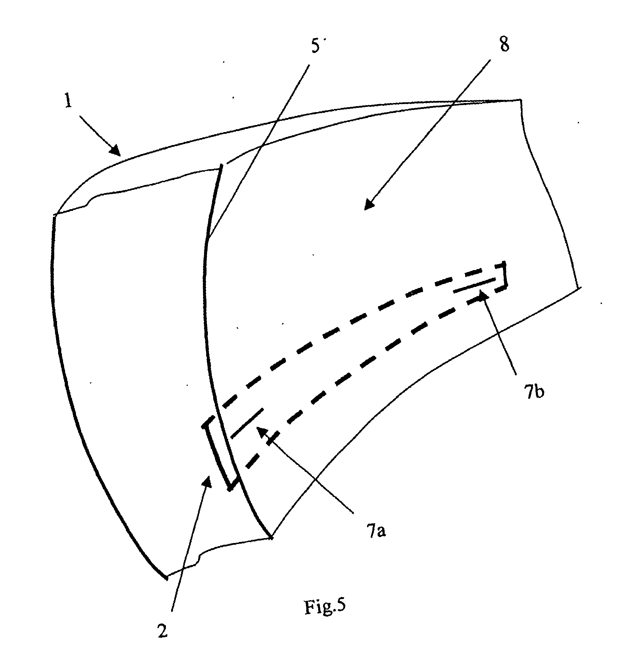

Figur 4 zeigt das auf einer Reifenaufbautrommel 6 aufgelegte Gummikissen 4 mit dem eingebetteten Platzhalterstreifen 2. Als erstes wird das Gummikissen 4 auf die Reifenaufbautrommel aufgelegt und anschließend darüber die Reifeninnenseele 5 aufgewickelt. Danach erfolgt die Reifenkonfektion nach einem herkömmlichen Verfahren.

Figur 5 zeigt einen Teilausschnitt des Reifens mit dem Platzhalterstreifen 2 in perspektivischer Ansicht nach der Fertigstellung des Reifens 1. In den beiden Endbereichen des Platzhalterstreifens 2 werden nach der Vulkanisation des Reifens 1 die beiden Einschnitte 7a und 7b in das Gummikissen 4 eingeschnitten. Das zur einfacheren Darstellung in der Figur nicht dargestellte Gummikissen ist bei der Reifenvulkanisation mit der Reifeninnenseele 5 stoffschlüssig verbunden worden und unterscheidet sich farblich von der umgebenden Reifeninnenseite 8. Anschließend wird ein Endbereich des Platzhalterstreifens 2 durch einen der Einschnitte 7a oder 7b mit einem in der Figur nicht dargestellten Ende der Transpondereinheit, beispielsweise über eine Klebeverbindung, verbunden. Am gegenüberliegenden Einschnitt 7a oder 7b wird der zweite Endbereich des Platzhalterstreifens 2 herausgeführt und anschließend der gesamte Platzhalterstreifen 2 durch diesen Einschnitt herausgezogen. Auf diese Weise wird die Transpondereinheit in das Gummikissen hineingezogen und dort wie in einer umschließenden Tasche positioniert. Im letzten Herstellungsschritt wird der Platzhalterstreifen 2 von der Transpondereinheit getrennt und dann die Einschnitte 7a und 7b beispielsweise durch eine Kaltvulkanisation geschlossen.

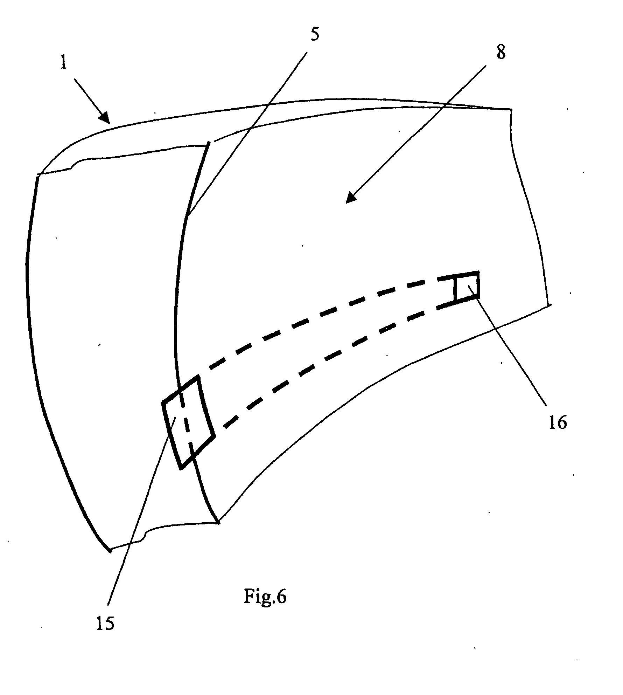

Figur 6 zeigt den im Reifen 1 angeordneten Platzhalterstreifen 2 mit herausragenden Endbereichen 15 und 16 als Teilausschnitt nach der Reifenvulkanisation. Die beiden Endbereiche 15 und 16 ragen bereits vor Beginn der Reifenkonfektion aus dem in der Figur nicht dargestellten Gummikissen heraus. Nach der Vulkanisation des Reifens erfolgt eine Verbindung der Transpondereinheit mit einem Endbereich 15 oder 16 des Platzhalterstreifens 2. Anschließend wird der Platzhalterstreifen wiederum herausgezogen und dabei gleichzeitig die Transpondereinheit im Reifen 1 positioniert.

### Bezugszeichenliste

- 1: Reifen
- 2: Platzhalterstreifen
- 3: Transpondereinheit
- 4: Gummikissen
- 5: Reifeninnenseele
- 6: Reifenaufbautrommel
- 7a,b: Einschnitte
- 8: Reifeninnenseite
- 9: Elektronikbauteil der Transpondereinheit
- 10,11: Antennen
- 12,13: Aussparungen des Platzhalterstreifens
- 14: Kunststofflasche
- 15,16: Endbereiche des Platzhalterstreifens

## Patentansprüche

1. Verfahren zur Herstellung eines Fahrzeugreifens mit einer Transpondereinheit (3), die in einem Gummikissen (4) eingebettet ist, das auf einer Reifenoberfläche des Reifens (1) angeordnet ist, wobei das Gummikissen (4) während der Herstellung des Reifens mit der Reifenoberfläche verbunden wird, wobei in dem Gummikissen (4) zunächst ausschließlich ein Platzhalterstreifen (2) angeordnet ist,
**dadurch gekennzeichnet, dass**
die Transpondereinheit (3) nach Fertigstellung des Reifens (1) wie folgt in das Gummikissen (4) eingebracht wird:
- über eine Öffnung des Gummikissens (4) wird die Transpondereinheit (3) mit dem Platzhalterstreifen (2) verbunden, und
- der Platzhalterstreifen (2) wird durch eine zweite Öffnung des Gummikissens (4) aus diesem herausgezogen, wobei die Transpondereinheit (3) dabei gleichzeitig durch die erste Öffnung in das Gummikissen (4) eingezogen wird.

2. Verfahren zur Herstellung eines Fahrzeugreifens nach Anspruch 1,
**dadurch gekennzeichnet, dass**
die in das Gummikissen (4) eingebettete Transpondereinheit (3) auf der Reifeninnenseite (8) angeordnet ist.

3. Verfahren zur Herstellung eines Fahrzeugreifens nach Anspruch 1 oder 2,
**dadurch gekennzeichnet, dass**
auf einer Reifenaufbautrommel (6) zunächst der in das Gummikissen (4) eingebettete Platzhalterstreifen (2) und darüber eine Reifeninnenseele (5) aufgebracht werden.

4. Verfahren zur Herstellung eines Fahrzeugreifens nach einem der Ansprüche 1 bis 3,
**dadurch gekennzeichnet, dass**
sich das Gummikissen (4) farblich von der Reifenoberfläche unterscheidet.

5. Verfahren zur Herstellung eines Fahrzeugreifens nach einem der Ansprüche 1 bis 4,
**dadurch gekennzeichnet, dass**
während der Herstellung des Reifens (1) zunächst ein Gummikissen (4) ohne Öffnungen mit der Reifenoberfläche verbunden wird und das Gummikissen (4) nach der Herstellung des Reifens (1) mit den beiden Öffnungen versehen wird.

6. Verfahren zur Herstellung eines Fahrzeugreifens nach einem der Ansprüche 1 bis 5,
**dadurch gekennzeichnet, dass**
die beiden Öffnungen in dem Gummikissen (4) als Einschnitte (7a,b) ausgebildet sind, die an sich gegenüberliegenden Enden des Gummikissens (4) eingeschnitten werden.

7. Verfahren zur Herstellung eines Fahrzeugreifens nach einem der Ansprüche 1 bis 6,
**dadurch gekennzeichnet, dass**
die Ausrichtungen der beiden Einschnitte (7a,b) parallel zur Längsausrichtung des Platzhalterstreifens (2) liegen.

8. Verfahren zur Herstellung eines Fahrzeugreifens nach einem der Ansprüche 1 bis 7,
**dadurch gekennzeichnet, dass**
während der Herstellung des Reifens (1) ein Gummikissen (4) mit der Reifenoberfläche verbunden wird, das die beiden Öffnungen bereits aufweist, wobei aus jeder Öffnung ein Ende des Platzhalterstreifens (2) herausragt.

9. Verfahren zur Herstellung eines Fahrzeugreifens nach einem der Ansprüche 1 bis 8,
**dadurch gekennzeichnet, dass**
der Platzhalterstreifen (2) aus einem Metall oder Teflonmaterial besteht.

10. Verfahren zur Herstellung eines Fahrzeugreifens nach einem der Ansprüche 1 bis 9,
**dadurch gekennzeichnet, dass**
der Platzhalterstreifen (2) größere Abmessungen als die Transpondereinheit (3) besitzt.

11. Verfahren zur Herstellung eines Fahrzeugreifens nach einem der Ansprüche 1 bis 10,
**dadurch gekennzeichnet, dass**
der Platzhalterstreifen (2) mit einem Antihaftmittel beschichtet ist.

12. Verfahren zur Herstellung eines Fahrzeugreifens nach einem der Ansprüche 1 bis 11,
**dadurch gekennzeichnet, dass**
der Platzhalterstreifen (2) über eine Klebung oder einen Formschluß mit der Transpondereinheit (3) verbunden wird.

13. Verfahren zur Herstellung eines Fahrzeugreifens nach einem der Ansprüche 1 bis 12,
**dadurch gekennzeichnet, dass**
das der Platzhalterstreifen (2) von der Transpondereinheit (3) getrennt wird, nachdem die Transpondereinheit (3) sich im Gummikissen (4) befindet.

14. Verfahren zur Herstellung eines Fahrzeugreifens nach einem der Ansprüche 1 bis 13,
**dadurch gekennzeichnet, dass**
die Transpondereinheit (3) an einem Ende eine Kunststofflasche (14) aufweist.

15. Verfahren zur Herstellung eines Fahrzeugreifens nach einem der Ansprüche 1 bis 14,
**dadurch gekennzeichnet, dass**
das Schließen der Einschnitte (7a,b) durch eine Kaltvulkanisation erfolgt.

16. Verfahren zur Herstellung eines Fahrzeugreifens nach einem der Ansprüche 1 bis 15,
**dadurch gekennzeichnet, dass**
das Gummikissen (4) in einem Wulstbereich auf der Reifeninnenseite (8)angeordnet ist.

## Claims

1. Method for manufacturing a vehicle tyre having a transponder unit (3) which is embedded in a rubber cushion (4) which is arranged on a surface of the tyre (1), the rubber cushion (4) being connected to the surface of the tyre during the manufacture of the tyre, a place marker strip (2) being initially exclusively arranged in the rubber cushion (4), **characterized in that**
after the tyre (1) is completed, the transponder unit (3) is introduced into the rubber cushion (4) as follows:
- the transponder unit (3) is connected to the place marker strip (2) through an opening in the rubber cushion (4), and
- the place marker strip (2) is pulled out of the rubber cushion (4) through a second opening therein, the transponder unit (3) being simultaneously pulled into the rubber cushion (4) through the first opening.

2. Method for manufacturing a vehicle tyre according to Claim 1,
**characterized in that**
the transponder unit (3) which is embedded in the rubber cushion (4) is arranged on the inside (8) of the tyre.

3. Method for manufacturing a vehicle tyre according to Claim 1 or 2,
**characterized in that**
the place marker strip (2) which is embedded in the rubber cushion (4) is initially applied to a tyre building drum (6) and a tyre inner lining (5) is applied over it.

4. Method for manufacturing a vehicle tyre according to one of Claims 1 to 3,
**characterized in that**
the rubber cushion (4) differs from the surface of the tyre in colour.

5. Method for manufacturing a vehicle tyre according to one of Claims 1 to 4,
**characterized in that**,
during the manufacture of the tyre (1), a rubber cushion (4) without openings is initially connected to the surface of the tyre, and the rubber cushion (4) is provided with the two openings after the manufacture of the tyre (1).

6. Method for manufacturing a vehicle tyre according to one of Claims 1 to 5,
**characterized in that**
the two openings in the rubber cushion (4) are embodied as indents (7a, b) which are formed at opposite ends of the rubber cushion (4).

7. Method for manufacturing a vehicle tyre according to one of Claims 1 to 6,
**characterized in that**
the two indents (7a, b) are oriented in parallel with the longitudinal orientation of the place marker strip (2).

8. Method for manufacturing a vehicle tyre according to one of Claims 1 to 7,
**characterized in that**,
during the manufacture of the tyre (1), a rubber cushion (4) is connected to the surface of the tyre and already has the two openings, one end of the place marker strip (2) projecting out of each opening.

9. Method for manufacturing a vehicle tyre according to one of Claims 1 to 8,
**characterized in that**
the place marker strip (2) is composed of a metal or of a teflon material.

10. Method for manufacturing a vehicle tyre according to one of Claims 1 to 9,
**characterized in that**
the place marker strip (2) has larger dimensions than the transponder unit (3).

11. Method for manufacturing a vehicle tyre according to one of Claims 1 to 10,
**characterized in that**
the place marker strip (2) is coated with an anti-adhesion agent.

12. Method for manufacturing a vehicle tyre according to one of Claims 1 to 11,
**characterized in that**
the place marker strip (2) is connected to the transponder unit (3) by means of a bonded connection or a positively locking connection.

13. Method for manufacturing a vehicle tyre according to one of Claims 1 to 12,
**characterized in that**
the place marker strip (2) is separated from the transponder unit (3) after the transponder unit (3) is located in the rubber cushion (4).

14. Method for manufacturing a vehicle tyre according to one of Claims 1 to 13,
**characterized in that**
the transponder unit (3) has a plastic clip (14) at one end.

15. Method for manufacturing a vehicle tyre according to one of Claims 1 to 14,
**characterized in that**
the indents (7a, b) are closed by means of cold vulcanization.

16. Method for manufacturing a vehicle tyre according to one of Claims 1 to 15,
**characterized in that**
the rubber cushion (4) is arranged in a bead region on the inside (8) of the tyre.

## Revendications

1. Procédé de fabrication d'un pneu de véhicule qui présente une unité de transpondeur (3) qui est incorporée dans un coussin de caoutchouc (4) qui est agencé sur une surface du pneu (1), le coussin de caoutchouc (4) étant relié à la surface du pneu lors de la fabrication du pneu et seule une bande de réservation (2) étant d'abord agencée dans le coussin de caoutchouc (4), **caractérisé en ce qu'**après la finition du pneu (1), l'unité de transpondeur (3) est introduite comme suit dans le coussin de caoutchouc (4) :
l'unité de transpondeur (3) est reliée à la bande de réservation (2) par une ouverture du coussin de caoutchouc (4) et
la bande de réservation (2) est retirée du coussin de caoutchouc (4) par une deuxième ouverture qui y est ménagée, l'unité de transpondeur (3) étant introduite en même temps dans le coussin de caoutchouc (4) par la première ouverture.

2. Procédé de fabrication d'un pneu de véhicule selon la revendication 1, **caractérisé en ce que** l'unité de transpondeur (3) incorporée dans le coussin de caoutchouc (4) est agencée sur le côté intérieur (8) du pneu.

3. Procédé de fabrication d'un pneu de véhicule selon les revendications 1 ou 2, **caractérisé en ce que** la bande de réservation (2) incorporée dans le coussin de caoutchouc (4) est d'abord apportée sur un tambour de formation de pneu (6) sur lequel est apportée une chemise intérieure de pneu (5).

4. Procédé de fabrication d'un pneu de véhicule selon l'une des revendications 1 à 3, **caractérisé en ce que** le coussin de caoutchouc (4) se distingue de la surface du pneu par sa couleur.

5. Procédé de fabrication d'un pneu de véhicule selon l'une des revendications 1 à 4, **caractérisé en ce que** lors de la fabrication du pneu (1), un coussin de caoutchouc (4) sans ouverture est relié à la surface du pneu, le coussin de caoutchouc (4) étant doté des deux ouvertures après la fabrication du pneu (1).

6. Procédé de fabrication d'un pneu de véhicule selon l'une des revendications 1 à 5, **caractérisé en ce que** les deux ouvertures ménagées dans le coussin de caoutchouc (4) sont configurées sous la forme d'entailles (7a, b) pratiquées à des extrémités opposées du coussin de caoutchouc (4).

7. Procédé de fabrication d'un pneu de véhicule selon l'une des revendications 1 à 6, **caractérisé en ce que** les deux entailles (7a, b) sont orientées parallèlement à l'extension longitudinale de la bande de réservation (2).

8. Procédé de fabrication d'un pneu de véhicule selon l'une des revendications 1 à 7, **caractérisé en ce que** pendant la fabrication du pneu (1), un coussin de caoutchouc (4) est relié à la surface du pneu et présente déjà les deux ouvertures, une extrémité de la bande de réservation (2) dépassant de chaque ouverture.

9. Procédé de fabrication d'un pneu de véhicule selon l'une des revendications 1 à 8, **caractérisé en ce que** le matériau de la bande de réservation (2) est un métal ou du Téflon.

10. Procédé de fabrication d'un pneu de véhicule selon l'une des revendications 1 à 9, **caractérisé en ce que** les dimensions de la bande de réservation (2) sont plus grandes que celles de l'unité de transpondeur (3).

11. Procédé de fabrication d'un pneu de véhicule selon l'une des revendications 1 à 10, **caractérisé en ce que** la bande de réservation (2) est revêtue d'un agent antiadhésif.

12. Procédé de fabrication d'un pneu de véhicule selon l'une des revendications 1 à 11, **caractérisé en ce que** la bande de réservation (2) est reliée à l'unité de transpondeur (3) par collage ou correspondance de forme.

13. Procédé de fabrication d'un pneu de véhicule selon l'une des revendications 1 à 12, **caractérisé en ce que** la bande de réservation (2) est séparée de l'unité de transpondeur (3) après que l'unité de transpondeur (3) a été placée dans le coussin de caoutchouc (4).

14. Procédé de fabrication d'un pneu de véhicule selon l'une des revendications 1 à 13, **caractérisé en ce que** l'unité de transpondeur (3) présente à l'une de ses extrémités une languette (14) en matière synthétique.

15. Procédé de fabrication d'un pneu de véhicule selon l'une des revendications 1 à 14, **caractérisé en ce que** la fermeture des entailles (7a, b) est effectuée par vulcanisation à froid.

16. Procédé de fabrication d'un pneu de véhicule selon l'une des revendications 1 à 15, **caractérisé en ce que** le coussin de caoutchouc (4) est agencé dans une zone de renflement du côté intérieur (8) du pneu.
